# EUROPÄISCHE PATENTSCHRIFT

(11) **EP 0 549 582 B1**
(45) Veröffentlichungstag und Bekanntmachung des Hinweises auf die Patenterteilung: **15.06.1994**
(21) Anmeldenummer: 91907892.3
(22) Anmeldetag: 24.04.1991
(51) Int. Cl.: F02F 3/02, F16J 1/16

(54) **TAUCHKOLBEN AUS LEICHTMETALL FÜR OTTOMOTOREN**
LIGHT-ALLOY PLUNGER PISTON FOR SPARK-IGNITION ENGINES
PISTON PLONGEUR EN ALLIAGE LEGER POUR MOTEURS A ALLUMAGE PAR ETINCELLE

(30) Priorität: 20.09.1990 DE 4029767
(43) Veröffentlichungstag der Anmeldung: 07.07.1993
(73) Patentinhaber: Mahle GmbH, 70376 Stuttgart (DE)
(72) Erfinder: RIPBERGER, Emil, D-7148 Remseck 3 (DE)
(86) Internationale Anmeldenummer: DE9100354
(87) Internationale Veröffentlichungsnummer: WO9205355

(56) Entgegenhaltungen:
- EP-A- 0 210 649
- WO-A-88/04724
- WO-A-90/07642
- DE-A- 3 600 750
- US-A- 2 295 199

## Beschreibung

Die Erfindung betrifft einen Tauchkolben aus Leichtmetall für Ottomotoren.

Die der Erfindung zugrundeliegende Problematik liegt darin, einen solchen Kolben möglichst leichtgewichtig, geräusch- und reibungsarm auszugestalten.

Ausgehend von einem bekannten Kolben nach WO 90/07642 wird das vorgenannte Problem durch eine Kolbenausführung nach den kennzeichnenden Merkmalen des Patentanspruchs 1 gelöst. Bei dieser Lösung sind von besonderer Bedeutung die Merkmale b, c, d, e und g, wobei es auf die Kombination dieser Merkmale untereinander und zusammen mit den übrigen Merkmalen ankommt.

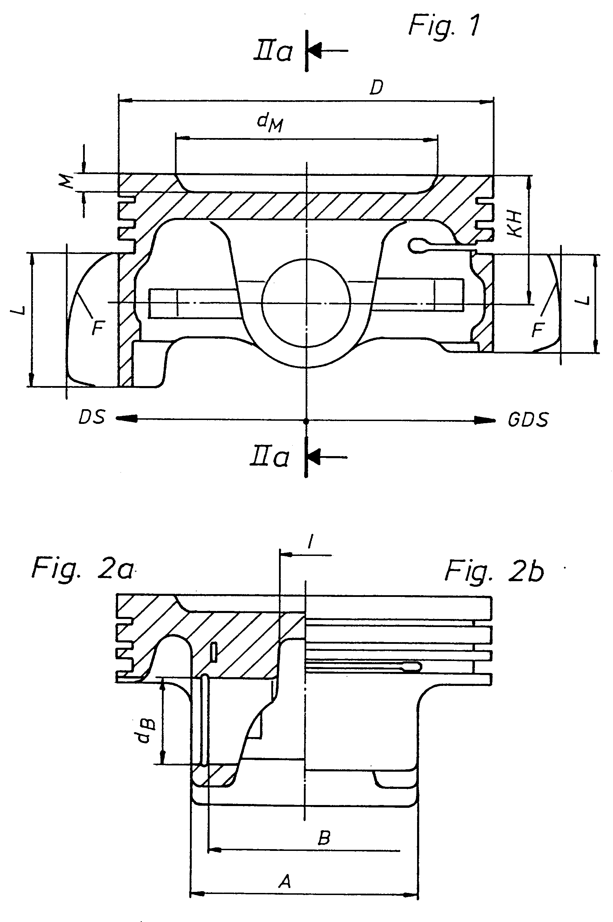

Ein Ausführungsbeispiel der Erfindung ist in der Zeichnung dargestellt. Es zeigen
- Fig. 1: einen Kolben im Längsschnitt
- Fig. 2a: einen Schnitt durch eine Hälfte des Kolbens nach Linie IIa - IIa
- Fig. 2b: eine Ansicht auf die Hälfte eines Kolbens in Richtung Druck-Gegendruckrichtung des Kolbens

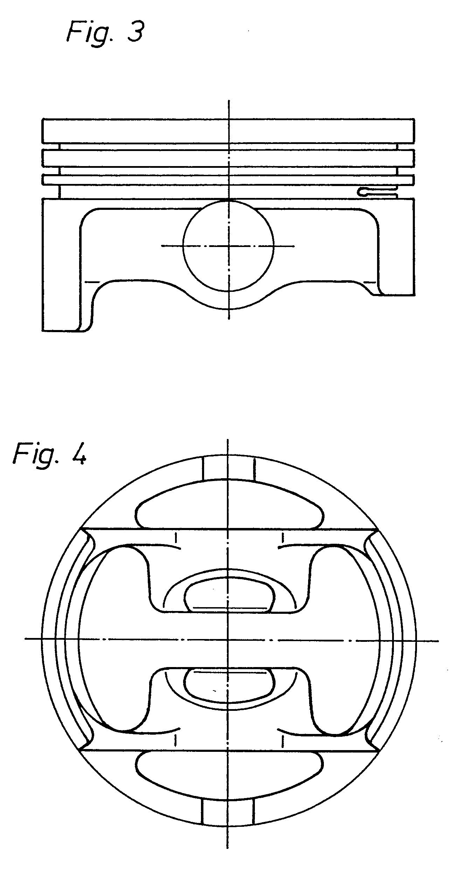

- Fig. 3: eine Ansicht des Kolbens in Richtung der Bolzenachse
- Fig. 4: eine Draufsicht auf den Kolben von unten

In der Zeichnung bedeuten:
- D =: Kolbendurchmesser
- KH =: Kompressionshöhe des Kolbens
- M =: Tiefe der Brennraummulde im Kolbenboden
- d_{M} =: Durchmesser der Brennraummulde
- A =: radial äußerer Abstand der Kolbenbolzennaben des Kolbens
- I =: radial innerer Abstand der Kolbenbolzennaben des Kolbens in einem Bereich oberhalb der Kolbenachse
- d_{B} =: Durchmesser des Kolbenbolzens
- B =: Länge des Kolbenbolzens
- L =: Länge des Kolbenschaftes unterhalb der untersten Kolbenringnut
- F =: Kolbenfeinkontur (Balligkeit; axiale Schaftmantellinie in Kolbenlängsrichtung
- DS =: Druckseite des Kolbens
- GDS =: Gegendruckseite des Kolbens

Eine vorteilhafte Ausgestaltung eines erfindungsgemäßen Aluminiumkolbens mit zwei Kompressionsringnuten und einer Ölabstreifringnut hat bezogen auf einen Kolbendurchmesser D = 90 mm folgende Abmessungen.
- KH =: 0,34D
- M =: 0,05D
- d_{M} =: 0,70D
- A =: 0,60D
- I =: 0,15D
- d_{B}=: 0,23D
- B =: 0,51D
- L =: 0,36D auf der Druckseite und 0,26D auf der Gegendruckseite

Der den Kolbenschaft von dem Kolbenkopf auf der GDS-Seite des Kolbens trennende Schlitz erstreckt sich über einen Umfangswinkel von insgesamt 80 Grad zentrisch um eine Ebene, die in der Kolbenachse senkrecht zur Bolzenachse aufgespannt ist.

Innerhalb des Kolbenschaftes sind zwei Regelstreifen eingesetzt, die jeweils durch die Naben des Kolbens hindurchlaufen und in Druck-Gegendruckrichtung des Kolbens in Umfangsrichtung des Kolbens Abstand zueinander aufweisen.

Der radiale innere Abstand I der Kolbenbolzennaben des Kolbens in einem Bereich oberhalb der Kolbenbolzenachse ist geringer als der unterhalb der Bolzenachse liegende Abstand dieser Naben. Die Abstandsvergrößerung unterhalb der BoLzenachse bemißt sich nach der Belastbarkeit des dortigen Nabenbereiches sowie insbesondere des dort liegenden Pleuels, das den Kolben mit der Kurbelwelle verbindet und zwischen den Naben Platz finden muß.

## Patentansprüche

1. Tauchkolben aus Leichtmetall für Ottomotoren, bei denen in den nachfolgenden Merkmalen bedeuten
D = Kolbendurchmesser
KH = Kompressionshöhe des Kolbens
M = Tiefe der Brennraummulde im Kolbenboden
d_{M} = Durchmesser der Brennraummulde
A = radial äußerer Abstand der Kolbenbolzen naben des Kolbens
I = radial innerer Abstand der Kolbenbolzennaben des Kolbens in einem Bereich oberhalb der Kolbenbolzenachse
d_{B} = Durchmesser des Kolbenbolzens
B = Länge des Kolbenbolzens
L = Länge des Kolbenschaftes unterhalb der unteresten Kolbenringnut
F = Kolbenfeinkontur (Balligkeit; axiale Schaftmantellinie) in Kolbenlängsrichtung
DS = Druckseite des Kolbens
GDS = Gegendruckseite des Kolbens
**mit den Merkmalen**
a) KH = (0,27 - 0,35) D für einen Kolben mit je einem Kompressions- und Ölabstreifring und (0,32 - 0,4)D für einen Kolben mit zwei Kompressionsringen und einem Ölabstreifring,
b) d_{B} = (0,16 - 0,25)D
c) in Bolzenrichtung ist der Kolbenschaft über die gesamte Höhe radial zurückgenommen, wobei der zurückgenommene Bereich auf jeder radialen Nabenaußenseite auf zur Bolzenrichtung etwa senkrechten Ebenen verläuft, wobei der Abstand dieser Ebenen voneinander A = (0,4 - 0,7)D ist,
d) zumindest die unterste Ringnut liegt in einem über der Bolzenachse verlaufenden Umfangsbereich in einem über eine Ausnehmung von der jeweiligen Kolbennabe beabstandeten Ringbandabschnitt,
**und folgenden kennzeichnenden Merkmalen**
e) in dem Boden des Kolbens liegt eine etwa zentrische Brennraummulde mit d_{M} größer als 0,5D und einer Tiefe M = (0,03 - 0,08)D,
f) I = (0,08 - 0,20)D
g) der innere radiale Abstand der Naben des Kolbens beträgt in einem unterhalb der Bolzenachse liegenden unteren Nabenbereich mehr als der engste oberhalb der Bolzenachse liegende Abstand (I),
h) B = (0,4 - 0,6)D
i) L = (0,30 - 0,50)D auf der Druckseite des Kolbens (DS) und (0,15 - 0,30)D auf der Gegendruckseite (GDS).

2. Kolben nach Anspruch 1,
**gekennzeichnet** durch die Merkmale
a) der Kolbenschaft ist auf der Gegendruckseite (GDS) durch einen Schlitz von dem Kolbenkopf getrennt,
b) die Schaftfeinkontur (F) verläuft auf der Druck- und Gegendruckseite des Kolbens (DS bzw. GDS) unsymmetrisch zueinander,
c) die Schaftfeinkontur (F) ist in Achsrichtung des Kolbens ballig, wobei die Balligkeit im oberen Schaftbereich auf der Gegendruckseite (GDS) kleiner als auf der Druckseite (DS) des Kolbens ist.

3. Kolben nach Anspruch 1 oder 2,
dadurch **gekennzeichnet**,
daß im Inneren des Kolbenschaftes angebrachte Regelstreifen aus einem Material mit einem gegenüber dem Kolbengrundmaterial geringeren Wärmeausdehnungskoeffizienten im Bereich der Kolbengegendruckseite (GDS) mehr an der Schaftoberkante liegen als auf der Kolbendruckseite (D5).

## Claims

1. Plunger piston of light metal for Otto engines, wherein the following symbols denote the stated features,
D = piston diameter
KH = compression height of the piston
M = depth of the combustion chamber depression in the piston crown
d_{M} = diameter of combustion chamber depression
A = radial outer spacing of the gudgeon pin bosses of the piston
I = radial inner spacing of the gudgeon pin bosses of the piston in a region above the gudgeon pin axis
d_{B} = diameter of the gudgeon pin
B = length of gudgeon pin
L = length of piston shaft below the lowest piston ring groove
F = piston fine contour (bulge; axial shaft generatrix) in longitudinal direction of piston
DS = thrust side of piston
GDS = counter-thrust side of piston,
having the features
a) KH = (0.27 - 0.35) D for a piston having one compression ring and one oil scraper ring and (0.32 - 0.4) D for a piston having two compression rings and one oil scraper ring,
b) d_{B} = (0.16 - 0.25) D
c) in the direction of the pin, the piston shaft is radially set back over the entire height, the set-back zone extending over each radial outer side of the boss on planes generally perpendicular to the pin direction, the spacing of these planes from each other being A = (0.4 - 0.7) D,
d) at least the lowest piston ring groove lies, in a circumferential zone extending above the pin axis, in a hoop portion spaced away from the relevant gudgeon pin boss by a recess,
and the following characterizing features
e) in the piston crown there is a generally central combustion chamber depression with d_{M} greater than 0.5 D and a depth M = (0.03 - 0.08) D,
f) I = (0.08 - 0.20) D
g) the inner radial spacing of the bosses of the piston, in a lower boss region situated below the pin axis, has a value greater than the narrowest spacing (I) situated above the pin axis,
h) B = (0.4 - 0.6) D
i) L = (0.30 - 0.50) D on the thrust side of the piston (DS) and (0.15 - 0.30) D on the counter-thrust side (GDS).

2. Piston according to Claim 1, characterized by the features
a) the piston shaft is separated from the piston crown on the counter-thrust side (GDS) by a slit,
b) the shaft fine contours (F) are asymmetrical from each other on the thrust and counter-thrust sides of the piston (DS, GDS respectively),
c) the shaft fine contour (F) is bulging in the axial direction of the piston, the bulge in the upper region of the shaft being smaller on the counter-thrust side (GDS) than on the thrust side (DS) of the piston.

3. Piston according to Claim 1 or 2, characterized in that control strips of a material having a smaller coefficient of thermal expansion than the basic material of the piston, fitted inside the piston shaft, are nearer to the shaft upper side in the region of the piston counter-thrust side (GDS) than on the piston thrust side (DS).

## Revendications

1. Piston plongeur en alliage léger pour moteurs à allumage par étincelle, pour lesquels les références suivantes sont affectées dans les caractéristiques ci-dessous.
D = Diamètre du piston
KH = Hauteur de compression du piston
M = Profondeur de la chambre de combustion creusée dans le fond de piston
d_{M} = Diamètre de la cavité de la chambre de combustion
A = Distance radiale externe des bossages d'axe de piston
I = Distance radiale interne des bossages d'axe de piston dans une zone sus-jacente à l'axe du tourillon de pied de bielle
d_{B} = Diamètre de l'axe de piston
B = Longueur de l'axe de piston
L = Longueur de la jupe au-dessous du segment de piston inférieur
F = Contour fin du piston (bombement; génératrice axiale de la jupe) dans le sens longitudinal du piston
DS = Côté pression du piston
GDS = Côté contre-pression du piston
avec les caractéristiques suivantes:
a) KH = (0,27 - 0,35) D, pour un piston avec un segment d'étanchéité et un segment racleur d'huile, et (0,32 - 0,4) D, pour un piston avec deux segments d'étanchéité et un segment racleur d'huile
b) d_{B} = (0,16 - 0,25) D
c) Dans le sens de l'axe, la jupe est réduite sur toute la hauteur dans le sens radial, la zone réduite se situant, sur chaque côté externe des bossages dans le sens radial, sur des plans à peu prés perpendiculaires par rapport au sens de l'axe, et l'écartement mutuel de ces plans étant A = (0,4 - 0,7) D
d) Le segment inférieur, du moins, se situe dans une zone périphérique, située au-dessus de l'axe du tourillon de pied de bielle, dans une gorge distante du bossage respectif, par l'intermédiaire d'un évidement
et avec les caractéristiques caractérisantes suivantes:
e) Une chambre de combustion à peu près centrée est creusée dans le fond du piston, avec d_{M} supérieur à 0,5 D et une profondeur M = (0,03 - 0,08) D
f) I = (0;08 - 0,20) D
g) Dans une zone inférieure, située au-dessous de l'axe du tourillon de pied de bielle, la distance radiale interne des bossages du piston est supérieure à la distance (I), immédiatement sus-jacente à l'axe du tourillon de pied de bielle
h) B = (0,4 - 0,6) D
i) L = (0,30 - 0,50) D côté pression du piston (DS) et (0,15 - 0,30) D côté contre-pression (GDS)

2. Piston suivant la revendication 1, caractérisé en ce que
a) La jupe de piston est séparée par un fente du fond de piston, côté contre-pression (GDS)
b) Le contour fin de la jupe (F) est asymétrique côté pression et contre-pression du piston (DS et/ou GDS)
c) Le contour fin de la jupe (F) est bombé dans le sens axial du piston, le bombement, dans la zone supérieure de la jupe, étant moins élevé côté contre-pression (GDS) que côté pression (DS) du piston

3. Piston suivant l'une des revendications 1 et 2, caractérisé en ce que des bandes de réglage, disposées à l'intérieur de la jupe de piston et composées d'un matériau, d'un coefficient de dilatation thermique moins élevé que le matériau du fond de piston, se situent plus sur le bord supérieur de la jupe, dans la zone du côté contre-pression (GDS) que côté pression (DS).
